# EUROPÄISCHE PATENTSCHRIFT

(11) **EP 2 232 058 B1**
(45) Veröffentlichungstag und Bekanntmachung des Hinweises auf die Patenterteilung: **02.11.2011**
(21) Anmeldenummer: 08870974.6
(22) Anmeldetag: 30.12.2008
(51) Int. Cl.: F03B 13/24

(54) **LUFTTURBINE FÜR EIN WELLENKRAFTWERK**
AIR TURBINE FOR A WAVE POWER STATION
TURBINE À AIR POUR CENTRALE HOULOMOTRICE

(30) Priorität: 16.01.2008 DE 102008004761
(43) Veröffentlichungstag der Anmeldung: 29.09.2010
(73) Patentinhaber: Voith Patent GmbH, 89522 Heidenheim (DE)
(72) Erfinder: ARLITT, Raphael, 89077 Ulm (DE); BANZHAF, Hans-Ulrich, 89522 Heidenheim (DE); STARZMANN, Ralf, 89555 Söhnstetten (DE); BISKUP, Frank, 73527 Schwäbisch Gmünd (DE)
(74) Vertreter: Dr. Weitzel & Partner
(86) Internationale Anmeldenummer: PCT/EP2008/011150
(87) Internationale Veröffentlichungsnummer: WO 2009/089902

(56) Entgegenhaltungen:
- WO-A1-2005/008061
- WO-A2-2008/067939
- DE-A1- 2 507 330
- DE-A1- 3 401 273
- GB-A- 2 099 929
- JP-A- 61 030 933
- JP-U- 2 031 378
- JP-U- 50 112 829
- US-A- 3 912 938
- US-A- 4 271 668
- SETOGUCHI T ET AL: "Current status of self rectifying air turbines for wave energy conversion" ENERGY CONVERSION AND MANAGEMENT, ELSEVIER SCIENCE PUBLISHERS, OXFORD, GB, Bd. 47, Nr. 15-16, 1. September 2006 (2006-09-01), Seiten 2382-2396, XP025067187 ISSN: 0196-8904 [gefunden am 2006-09-01]

## Beschreibung

Die Erfindung betrifft eine Luftturbine für ein Wellenkraftwerk, insbesondere eine mehrstufige Wellsturbine.

Wellenkraftwerke nach dem Prinzip einer oszillierenden Wassersäule (Oscillating Water Column - OWC) sind bekannt. Dabei werden in einer Wellenkammer, in die Wellen durch eine unterhalb des Wasserspiegels befindliche Zugangsöffnung eindringen, Druckschwankungen in dem sich oberhalb des Wasserspiegels befindlichen Luftvolumen erzeugt. Die so entstehenden Über- und Unterdrücke innerhalb der Wellenkammer führen zu einer Aus- und Einströmung durch einen räumlich begrenzten Belüftungskanal, in dem eine bidirektional anströmbare Luftturbine untergebracht ist.

Eine bevorzugte Bauform einer solchen bidirektional anströmbaren Luftturbine stellt eine Wellsturbine dar. Charakteristisch für eine Wellsturbine sind die parallel zur Rotationsebene angeordneten Turbinenblätter des axial angeströmten Rotors. Dabei weisen die Turbinenblätter eine zur Rotationsebene symmetrische Gestalt auf, wobei für den richtungskonstanten Umlauf das Profil der Turbinenblätter tropfenförmig gestaltet ist und entsprechend der Symmetriebedingungen keine Wölbung aufweist. Für die Profilkontur wird meist ein Tragflügelprofil gewählt, beispielsweise aus der vierstelligen NACA-Reihe.

Weitere Ausgestaltungsmöglichkeiten für Luftturbinen mit der Vorgabe einer bidirektionalen Anströmbarkeit stellen Impulsturbinen dar, beispielsweise gegenrotierende Turbinen vom McCromick-Typ. Ferner sind Luftturbinen mit radialer Strömungsführung bekannt.

Weitere typische Komponenten einer Luftturbine sind ein vom Rotor angetriebener elektrischer Generator, eine Absperrklappe und ein Schalldämpfer. Des Weiteren ist bekannt, vor oder nach bidirektional anströmbaren Luftturbinen mit axialer Strömungsführung Leitschaufeln zu verwenden. Hierzu wird auf M. Suzuki, C. Arakawa, "Guide Vanes Effect of Wells Turbine for Wave Power Generator", International Journal of Offshore and Polar Engineering, Vol. 10, No. 2, Juni 2000 (ISSN 1053-5381) verwiesen. Aus diesem Artikel geht hervor, dass für einstufige Wellsturbinen Leitschaufelanordnungen einem Rotor stromaufwärts und/oder stromabwärts zugeordnet werden können. Es wird angenommen, dass die Steigerung im Wirkungsgrad vorwiegend auf die zum Rotor stromaufwärts angeordneten Leitschaufeln zurückzuführen ist.

Der in einem typischen Wellenkraftwerk vorliegende pneumatische Druck in der Wellenkammer übersteigt meist das Druckniveau, welches auf eine Wellsturbine mit einer einzigen Rotorstufe angewendet werden kann. Das Kriterium hierfür ist in der Vorgabe zu sehen, wonach auf der Saugseite einer Rotorschaufel keine transsonische Strömung entstehen darf, welche Stöße und hohe Strömungswiderstände mit sich bringen würde. Dies führt unmittelbar zu der Forderung einer maximal zulässigen Umfangsgeschwindigkeit an der Spitze der Rotorblätter, wodurch der durch eine Rotorstufe bewirkte Druckabbau begrenzt ist. Entsprechend wurde vorgeschlagen, Wellsturbinen für Wellenkraftwerke zweistufig, das heißt mit zwei Rotoren, auszugestalten. Im Bedarfsfall können weitere Rotoren hinzugenommen werden, sodass in der vorliegenden Anmeldung der Begriff einer mehrstufigen Luftturbine für die Verwendung von wenigstens zwei und möglicherweise mehr Rotoren steht. Für die Ausbildung einer zweistufigen Wellsturbine in einem Wellenkraftwerk wird auf die US 5,191,225 verwiesen.

Leitschaufeln für mehrstufige Luftturbinen sind in T. Setoguchi, M. Takao, "Current status of self rectifying air turbines for wave energy conversion", Energy Conversion and Management, 47 (2006), 2382-2396 genannt. Offenbart wird die Verwendung einer Wellsturbine mit zwei aufeinander folgenden Rotorstufen, wobei stromaufwärts und stromabwärts zu diesem Rotorpaar Leitschaufeln angeordnet sind. Für jede Strömungsrichtung wird demnach eine Leitschaufelanordnung stromaufwärts des Rotorenpaars vorliegen, die nach fachmännischer Kenntnis zu einer Steigerung des Wirkungsgrads der Luftturbine führt. Eine Verwendung von Leitschaufeln zwischen der ersten Rotorstufe und der zweiten Rotorstufe ist in der GB 2 099 929 A offenbart. Nach dem bisherigen Verständnis führt der erste Rotor einer Wellsturbine, die ideal axial angeströmt wird, zu einer teilweisen Umlenkung der Strömung entgegen der Rotationsrichtung des ersten Rotors. Demnach liegen abstromseitig zum ersten Rotor axiale und in Umfangsrichtung orientierte Geschwindigkeitskomponenten in der Abströmung vor, was zu einer Verringerung des Anströmungswinkels für den stromabwärtig nachfolgenden, gleichsinnig rotierenden zweiten Rotor führt. Dabei ergibt sich der effektiv vorliegende Anströmungswinkel durch eine vektorielle Addition der durch den Umlauf eines Rotors bedingten, in Umfangsrichtung gerichteten Geschwindigkeitskomponenten und der absoluten Anströmungsgeschwlndigkeit im ortsfesten System durch die auf den Rotor auftreffende Luftströmung.

Der Erfindung liegt die Aufgabe zugrunde, das von einer zwei- oder mehrstufigen axial durchströmten Luftturbine für eine bidirektionale Anströmung, insbesondere einer Wellsturbine, aufgenommene Drehmoment zu steigern. Es ist ferner eine Luftturbine anzugeben, die sich durch einen hohen Wirkungsgrad sowie durch konstruktive und fertigungsiechnische Einfachheit auszeichnet.

Die der Erfindung zugrunde liegende Aufgabe wird durch die Merkmale des unabhängigen Anspruchs 1 gelöst.

Demnach haben die Erfinder erkannt, dass eine zwei- oder mehrstufige, bidirektional durchströmte Luftturbine mit axialer Strömungsführung dann einen hohen Wirkungsgrad erzielt, wenn zwischen einer ersten Rotoranordnung mit einem ersten Rotor und einer zweiten Rotoranordnung mit einem zweiten Rotor eine Leitschaufelanordnung vorliegt. Diese führt insbesondere dann zu einer Erhöhung des aus der Luftströmung aufgenommenen Moments, wenn die zwischen dem ersten Rotor und dem zweiten Rotor positionierten Leitschaufeln den vom stromaufwärtig angeordneten Rotor erzeugten Drall in der Luftströmung reduzieren. Die damit verbundene Vergrößerung des Anströmwinkels am stromabwärtigen Rotor Ist dann im Hinblick auf eine Strömungsablösung unkritisch, wenn der Anströmungswinkel des stromaufwärtigen Rotors, der kleiner als der kritische Anströmwinkel gewählt ist, für den stromabwärtigen Rotor nicht überschritten wird.

Aufgrund der vorliegenden bidirektionalen Anströmung der Luftturbine ist die zwischen der ersten und der zweiten Rotoranordnung positionierte Leitschaufelanordnung im Hinblick auf die zyklisch vorliegende Strömungsrichtungsumkehr anzupassen, im einfachsten Fall wird eine zu einem Axialschnitt symmetrische Anordnung beziehungsweise eine entsprechend gewählte Geometrie für die Leitschaufeln gewählt oder mehrere Leitschaufeln axial gestaffelt angeordnet.

Die der Erfindung zugrunde liegende Lehre, wonach der durch einen stromaufwärtig angeordneten Rotor erzeugte Drall vermindert wird, führt dann zu einer besonders hohen Effizienzsteigerung, wenn der Drall so weit reduziert wird, dass der stromabwärtig vorliegende Rotor entsprechend zum stromaufwärtigen Rotor im Hinblick auf die Drallkomponente in der Anströmung angeströmt wird. Entsprechend werden für ein bevorzugtes Ausgestaltungsbeispiel der Erfindung die Leitschaufeln zwischen dem ersten Rotor und dem zweiten Rotor eine Geometrie aufweisen, die an die vom Radius abhängige, vom stromaufwärtigen Rotor erzeugte Drallkomponente angepasst ist. Dabei ist die von einer Rotorschaufel erzeugte Geschwindigkeitskomponente in Umfangsrichtung, die entgegengesetzt zur Umlaufrichtung des Rotors gerichtet ist, an der Spitze der Turbinenschaufeln geringer verglichen mit den kleineren Radien im Bereich der Nabe des Rotors. Entsprechend wird eine erfindungsgemäße Leitschaufel für größere Radien den Drall weniger reduzieren als für kleinere Radien.

Die voranstehend genannten Forderungen im Hinblick auf die Symmetriebedingungen sowie auf die radiusabhängige Drallverminderung lassen sich bevorzugterweise dann mit einer fertigungstechnisch einfach gestalteten Leitschaufelgeometrie verbinden, wenn die Krümmung der Leitschaufeln über den gesamten Radius im Hinblick auf die Einbaulage konstant bleibt. Besonders bevorzugt wird die Leitschaufelkontur an die gleichbleibende Krümmung eines Kreisbogens angepasst. Die Forderung einer radiusabhängigen Drallkorrektur wird dann erfüllt, wenn für kleinere Radien, das heißt zur Nabe hin, die Korrektur der Leitschaufel sich über eine weitere Bogenlänge im Vergleich zu größeren Radien und damit zu den Bereichen in der Nähe der Gehäusewand des Strömungskanals erstreckt. Hieraus folgt automatisch, dass für kleinere Radien die Anströmungswinkel der Luftströmung an der Leitschaufel größer gewählt sind im Vergleich zu größeren Radien, für die die Luftströmung über eine kürzere Weglänge entlang des vorgegebenen Kreisbogens geführt wird.

Gemäß einer besonders bevorzugten Ausgestaltung wird den Leitschaufeln zwischen der ersten Rotoranordnung und der zweiten Rotoranordnung der Luftturbine zusätzlich zur Funktion einer Drallreduktion als weitere Aufgabe die Abstützung eines zwischen der ersten Rotoranordnung und der zweiten Rotoranordnung im Strömungskanal angeordneten elektrischen Generators zugeordnet. Demnach bilden für diese Ausgestaltung die Leitschaufeln zugleich die Generatorstreben, die eine Verbindung zwischen dem Generatorgehäuse und der Innenwandung des Strömungskanals herstellen. In der Kombination aus Leitschaufeln und Generatorstreben können zusätzlich Durchführungen vorgesehen sein, die zum Durchgriff von das Generatorgehäuse mit der Innenwandung verbindenden Halteelementen und für die elektrischen Verbindungskabel des Generators dienen. In diesen Durchführungen können auch sonstige Versorgungsleitungen verlegt sein, zum Beispiel durch Zuführung von Kühlmedien oder von Reinigungsmedien, die zur Entfernung von Ablagerungen, etwa Saizverkrustungen, an den umströmten Komponenten der Rotoranordnungen, der Leitschaufeln und der Innenwandung des Strömungskanals und des Generators selbst dienen. Des Weiteren wird der elektrische Generator über eine Antriebswelle angetrieben, zu der der erste Rotor und der zweite Rotor in drehstarrer Verbindung stehen.

Eine Kombination aus Leitschaufeln und Generatorstreben lässt sich für die voranstehend genannte Geometrie mit einer gleichmäßigen Krümmung realisieren, da so eine geradlinige Durchführung innerhalb der Generatorstrebe ausgebildet werden kann, die in Einbaulage eine radiale Erstreckung aufweist.

Nachfolgend wird die Erfindung anhand von Ausführungsbeispielen und Figuren genauer erläutert. In diesen ist im Einzelnen Folgendes dargestellt:
- Figur 1: zeigt in einer perspektivischen Teilansicht eine Luftturbine mit einer zwischen einem ersten Rotor und einem zweiten Rotor angeordneten Leitschaufel.
- Figur 2: zeigt eine Draufsicht auf die in Figur 1 gezeigte Anordnung.
- Figur 3: zeigt die Anströmungsverhältnisse und die Drallerzeugung für die Luftströmung um eine Rotorschaufel einer dem Stand der Technik entsprechenden Wellsturbine.

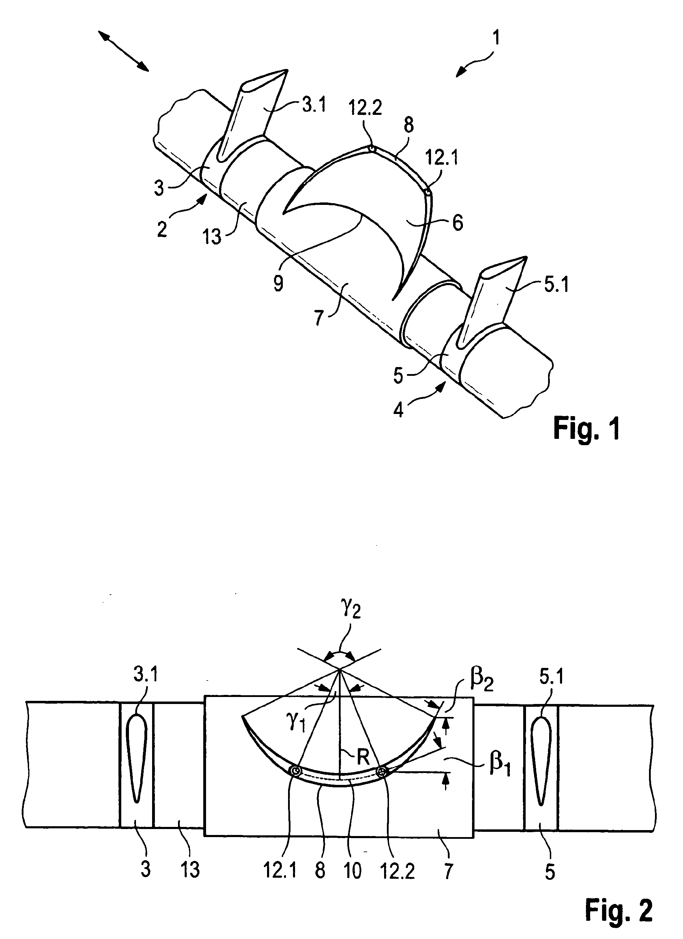

In Figur 1 sind die grundlegenden Komponenten einer erfindungsgemäßen Luftturbine 1 in einer perspektivischen und schematisch vereinfachten Teilansicht gezeigt. Dargestellt ist eine Rotorschaufel 3.1 eines ersten Rotors 3 für eine erste Rotoranordnung 2 der Luftturbine 1. Ferner ist eine zweite Rotorschaufel 5.1 eines zweiten Rotors 5 für eine zweite Rotoranordnung 4 gezeigt. Demnach ist die dargestellte Ausgestaltung als zweistufige Wellsturbine ausgeführt. Zur Vereinfachung der Darstellung wird auf die Abbildung weiterer Rotorschaufeln des ersten Rotors 3 und des zweiten Rotors 5 verzichtet.

Der erste Rotor 3 und der zweite Rotor 5 bilden ein Rotorpaar, das bidirektional und axial angeströmt wird - hierzu ist in Figur 1 ein doppelseitiger Pfeil gezeigt. Dies soll verdeutlichen, dass in Abhängigkeit der jeweils vorliegenden Anströmung einer der beiden Rotoren 3, 5 der stromaufwärtige Rotor und der andere Rotor der stromabwärtige sein wird und sich diese Zuordnung mit wechselnder Anströmungsrichtung umkehren wird.

Erfindungsgemäß ist zwischen dem ersten Rotor 3 und dem zweiten Rotor 4 der Luftturbine 1 eine Leitschaufelanordnung vorgesehen, wobei in der vereinfachten Darstellung von Figur 1 nur eine einzelne, erfindungsgemäß positionierte Leitschaufel 6 gezeigt wird. Bevorzugt liegt zwischen dem ersten Rotor 3 und dem zweiten Rotor 4 der Luftturbine 1 eine Vielzahl von Leitschaufeln 6 vor, die der Drallreduktion und damit der Angleichung der Anströmungsverhältnisse für den ersten Rotor 3 und für den zweiten Rotor 4 der Luftturbine 1 dienen.

Im Einzelnen nicht dargestellt ist ein Strömungskanal, in dem sich die Luftturbine 1 befindet, der einen Zugang zu einer Wellenkammer eines Wellenkraftwerks beziehungsweise zur Außenumgebung aufweist. Des Weiteren wird auf die Darstellung weiterer Komponenten der Luftturbine 1, wie eine Absperrklappe oder eine Schalldämpfereinrichtung, verzichtet.

Für die in Figur 1 dargestellte Ausgestaltung wird die erste Rotoranordnung 2 durch den ersten Rotor 3 gebildet. Entsprechend besteht die zweite Rotoranordnung 4 aus dem zweiten Rotor 5. Es sind jedoch Ausgestaltungen denkbar, bei denen die erste Rotoranordnung 2 eine Vielzahl erster Rotoren und die zweite Rotoranordnung 4 eine Vielzahl zweiter Rotoren aufweisen. Erfindungsgemäß liegt zumindest im axialen Zwischenraum zwischen der erste Rotoranordnung 2 und der zweiten Rotoranordnung 4 eine den Drall beeinflussende Leitschaufelanordnung vor. Ferner kann eine solche Leitschaufelanordnung zwischen aufeinander folgenden Rotoren innerhalb einer der Rotoranordnungen vorgesehen sein. Des Weiteren kann eine Rotoranordnung zusätzliche Leitschaufeln umfassen, die nicht zwischen einem Rotorpaar innerhalb der Rotoranordnung oder im Zwischenbereich zur axial nachfolgenden Rotoranordnung angeordnet sind.

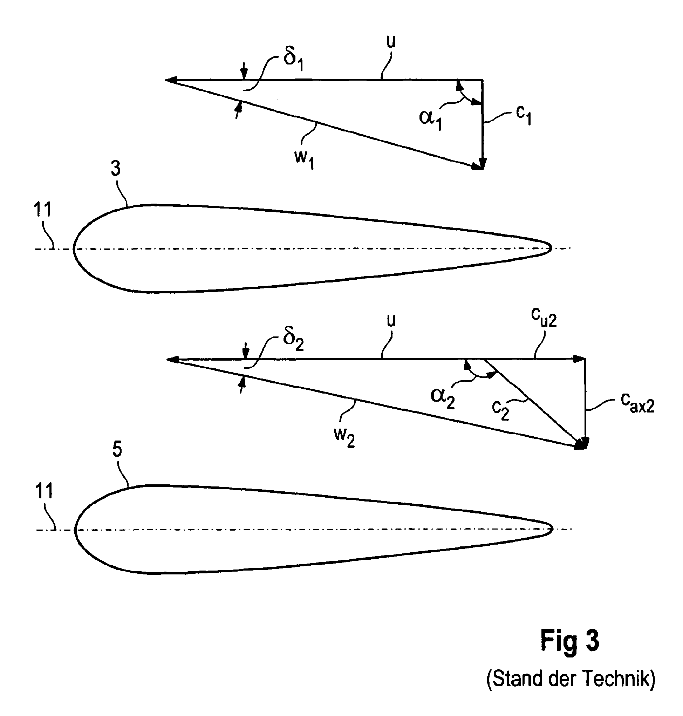

Die Entstehung des Dralls, der durch die erfindungsgemäße Leitschaufelanordnung zu reduzieren ist, wird nachfolgend anhand von Figur 3 erläutert. Diese zeigt einen Zylinderschnitt für eine dem Stand der Technik entsprechende, zweistufige Wellsturbine ohne die erfindungsgemäße Leitschaufelanordnung. Mit dem Bezugszeichen 11 wird die Rotationsebene des ersten Rotors 3 angedeutet, der vorliegend den stromaufwärtigen Rotor bildet. Skizziert ist der anströmungsseitige Geschwindigkeitsvektor der Luftströmung c₁ mit der Annahme einer ausschließlich axialen Anströmung des ersten Rotors 3. Ferner ist der anströmungsseitige, effektive Geschwindigkeitsvektor w₁ für das Tragflächenprofil des ersten Rotors 3 dargestellt. Dieser ergibt sich als Vektoraddition der Rotationsgeschwindigkeit u des ersten Rotors 3 und des anströmungsseitigen Geschwindigkeitsvektors der Luftströmung c₁. Hieraus resultiert ein effektiver Anströmungswinkel δ₁ des vorliegend betrachteten Rotors.

In Figur 3 ist ferner die Veränderung der Luftströmung aufgrund der Wirkung des ersten Rotors 3 dargestellt, die der zweite Rotor 5 sieht, welcher vorliegend den stromabwärtigen Rotor bildet. Ersichtlich ist, dass die Luftströmung neben der abströmungsseitigen Geschwindigkeitskomponente in Axialrichtung cₐₓ₂, die in Betrag und Richtung c₁ entspricht, eine zusätzliche abströmungsseitige Geschwindigkeitskomponente in Umfangsrichtung cᵤ₂ aufweist, welche entgegengesetzt zur Umlaufrichtung der ersten Rotorschaufel 3.1 orientiert ist. Diese abströmungsseitige Geschwindigkeitskomponente in Umfangsrichtung cᵤ₂ wird in der vorliegenden Anmeldung als Drall bezeichnet, der im Strömungsnachlauf zu einem Rotor entsteht. Dieser Drall ändert sich für Zylinderschnitte auf unterschiedlichen Radien, wobei ein größerer Drall für kleinere Radien entsteht, sodass im Bereich der Nabe im Nachlauf für einen Rotor eine größere Drallkorrektur vorzunehmen ist im Vergleich zum Spitzenbereich der Rotorschaufel, der sich nahe der Wandung des Strömungskanals befindet.

Aus Figur 3 ist ferner ersichtlich, dass der zweite Rotor 5, der die Nachlaufströmung nach einem ersten Rotor 3 aufnimmt, einen abströmungsseitigen, effektiven Geschwindigkeitsvektor w₂ aufweist, der zu einem verringerten, effektiven Anströmungswinkel der zweiten Rotoranordnung δ₂ führt. Dies erscheint zunächst im Hinblick auf eine Strömungsablösung an den Rotorschaufeln vorteilhaft. Die Erfinder haben jedoch erkannt, dass im Fall einer Rückführung des Dralls und einer im Wesentlichen gleichen Anströmung des ersten Rotors 3 und des zweiten Rotors 5 ein höheres Drehmoment aufgenommen wird. Insgesamt entsteht durch die Drallrückführung mittels einer Leitschaufelanordnung im axialen Zwischenbereich zwischen einem Rotorpaar eine Luftturbine 1 mit einem höheren Wirkungsgrad.

Gemäß der Darstellungen in den Figuren 1 und 2 wird bevorzugt, die erfindungsgemäßen Leitschaufeln 6 so anzupassen, dass ihre Geometrie über ihre Radialerstreckung derart variiert, dass der über den Radius variierende Drall gleichmäßig zurückgeführt wird. Gemäß einer konstruktiven einfachen und bevorzugten Ausgestaltung ist hierzu eine Leitschaufelgeometrie vorgesehen, die über eine konstante Krümmung verfügt. Demnach kann der Leitschaufelgeometrie ein Radius des Leitschaufelprofils R zugeordnet werden - dies ist insbesondere aus der Draufsicht auf die Anordnung aus Figur 1, die in Figur 2 dargestellt ist, ersichtlich. Demnach folgt die Mittenlinie des Leitschaufelprofils 10 einem Kreisbogen, wobei je nach Grad der gewünschten Drallreduktion eine Anpassung der symmetrisch gewählten Sektorwinkel vorgenommen wird. Hierzu ist am Leitschaufelanschluss zum Strömungskanal 8 ein Kreissektorwinkel auf großem Radius γ₁ gezeigt, der kleiner als der Kreissektorwinkel auf kleinem Radius γ₂ für den nabennahen Bereich ist. In der vorliegenden Ausgestaltung ist dieser nabennahe Bereich gleichzeitig der Leitschaufelanschluss zum elektrischen Generator 9. Für alle dazwischenliegenden Radien kann ein kontinuierlicher, im einfachsten Fall linearer Übergang vorgenommen werden. Durch eine solchermaßen gewählte Geometrie für die Leitschaufel 6 entstehen kleine Anströmungswinkel der Leitschaufel auf großem Radius β₁ verglichen zu größeren Anströmungswinkeln der Leitschaufel auf kleinem Radius β₂.

Gemäß einer bevorzugten Ausgestaltung, die in den Figuren 1 und 2 dargestellt ist, übernehmen die Leitschaufeln 6 gleichzeitig die Funktion von Generatorstreben. Entsprechend ist ein elektrischer Generator 7 im axialen Zwischenraum zwischen der ersten Rotoranordnung 2 und der zweiten Rotoranordnung 4 der Luftturbine innerhalb des Strömungskanals angeordnet. Die Verbindung des elektrischen Generators 7 zur im Einzelnen nicht dargestellten Wandung dieses Strömungskanals erfolgt bevorzugt durch geradlinige Durchführungen innerhalb der Leitschaufel 6. Dies ist besonders deutlich aus der Aufsichtsdarstellung von Figur 2 ersichtlich, die ein erstes Befestigungselement 12.1 und ein zweites Befestigungselement 12.2 zeigt. Des Weiteren können in den Durchführungen die elektrischen Verbindungskabel sowie sonstige Versorgungsleitungen zum elektrischen Generator geführt werden. Dies ist im Einzelnen nicht in den Figuren dargestellt.

Aufgrund der gleichbleibenden Krümmung für die in den Figuren 1 und 2 gezeigte Leitschaufel liegen die Projektionen der Zylinderschnitte der Leitschaufel 6 in radialer Richtung übereinander, sodass auf einfache Art und Weise geradlinige, in Einbaulage radial orientierte Durchführungen realisiert werden können. Bevorzugt wird die Leitschaufel 6 eine Dicke aufweisen, die im Bereich des ersten Befestigungselements 12.1 und des zweiten Befestigungselements 12.2 zu einer hinreichenden Strukturfestigkeit führt, während die Leitschaufel 6 zu den Strömungskanten hin in einem spitzen Winkel zuläuft.

Aus den Figuren 1 und 2 ist ersichtlich, dass die Leitschaufel 6 im Hinblick auf eine bidirektionale Anströmbarkeit zu einem mittig gelegenen Axialschnitt spiegelsymmetrisch ausgebildet ist. Dabei wird die Strömung an der Leitschaufel 6 nicht über den gesamten Verlauf der Leitschaufel geführt, was zu einer Überkompensation des Dralls führen würde, stattdessen ist von einer Strömungsablösung auszugehen, die in jenem Bereich liegt, der sich abströmungsseitig zur genannten Symmetrieebene befindet. Hierdurch wird die Strömung abströmungsseitig zur Leitschaufel 6 im Wesentlichen den Drall zurückführen, der durch den stromaufwärtigen Rotor erzeugt wurde.

Dabei sind Ausgestaltungen denkbar, bei denen die Leitschaufel 6 den Drall nicht vollständig aus der Luftströmung entnimmt, sondern den Drall im Wesentlichen auf den Wert zurückführt, den der stromaufwärts gelegene Rotor aufnimmt. So ist es möglich, dass vor dem stromaufwärtigen Rotor eine zusätzliche Leitschaufelanordnung vorliegt und der stromaufwärtige Rotor bereits bewusst mit einem gewissen Drall angeströmt wird. Gemäß der Erfindung dient demnach die Leitschaufel dazu, den stromaufwärtigen Rotor entsprechend zum stromabwärtigen anzuströmen. Demnach wird der in Figur 3 gezeigte abströmungsseitige Absolutwinkel α₂ im Nachlauf zum stromaufwärtigen Rotor so korrigiert, dass er im Wesentlichen dem abströmungsseitigen Absolutwinkel α₁ vor diesem stromaufwärtigen Rotor entspricht und so beide Rotoren in Triebverbindung an einer gemeinsamen Rotorwelle 13 auf eine übereinstimmende, optimale Drehzahl eingestellt werden können. Damit kann auf die Zwischenschaltung von Getrieben zum Antrieb eines elektrischen Generators verzichtet werden. Folglich reduziert sich das Bauraumerfordemis und der elektrische Generator kann zwischen der ersten Rotoranordnung 2 und der zweiten Rotoranordnung 4 zentral im Strömungskanal platziert werden.

### Bezugszeichenliste

- 1: Luftturbine
- 2: erste Rotoranordnung
- 3: erster Rotor
- 3.1: erste Rotorschaufel
- 4: zweite Rotoranordnung
- 5: zweiter Rotor
- 5.1: zweite Rotorschaufel
- 6: Leitschaufel
- 7: elektrischer Generator
- 8: Leitschaufelanschluss zum Strömungskanal
- 9: Leitschaufelanschluss zum elektrischen Generator
- 10: Mittenlinie des Leitschaufelprofils
- 11: Rotationsebene
- 12.1: erstes Befestigungselement
- 12.2: zweites Befestigungselement
- 13: gemeinsame Rotorwelle
- R: Radius des Leitschaufelprofils
- β₁: Anströmungswinkel der Leitschaufel auf großem Radius
- β₂: Anströmungswinkel der Leitschaufel auf kleinem Radius
- α₁: anströmungsseitiger Absolutwinkel
- α₂: abströmungsseitiger Absolutwinkel
- γ₁: Kreissektorwinkel auf großem Radius
- γ₂: Kreissektorwinkel auf kleinem Radius
- δ₁: effektiver Anströmungswinkel der ersten Rotoranordnung
- δ₂: effektiver Anströmungswinkel der zweiten Rotoranordnung
- c₁: anströmungsseitiger Geschwindigkeitsvektor der Luftströmung
- c₂: abströmungsseitiger Anströmungswinkel der Luftströmung
- cᵤ₂: abströmungsseitige Geschwindigkeitskomponente in Umfangsrichtung
- cₐₓ₂: abströmungsseitige Geschwindigkeitskomponente in Axialrichtung
- u: Rotationsgeschwindigkeit
- w₁: anströmungsseitiger effektiver Geschwindigkeitsvektor
- w₂: abströmungsseitiger effektiver Geschwindigkeitsvektor

## Patentansprüche

1. Luftturbine (1) für ein Wellenkraftwerk angetrieben durch eine bidirektionale Luftströmung mit wenigstens einer ersten Rotoranordnung (2), umfassend einen ersten Rotor (3), und wenigstens einer zweiten Rotoranordnung (4), umfassend einen zweiten Rotor (5); der erste Rotor (3) und der zweite Rotor (5) behalten beim Betrieb der Luftturbine (1) unabhängig von der Anströmungsrichtung ihre Drehrichtung bei und bilden ein axial durchströmtes Rotorpaar in einem Strömungskanal, wobei abhängig von der Anströmungsrichtung einer der Rotoren den stromaufwärtigen Rotor und der andere Rotor den stromabwärtigen Rotor bildet;
wobei
zwischen dem ersten Rotor (3) und dem zweiten Rotor (5) Leitschaufeln (6) angeordnet sind, die den vom stromaufwärtigen Rotor erzeugten Drall in der Luftströmung reduzieren, **dadurch gekennzeichnet, dass** die Leitschaufeln (6) entlang ihrer radialen Erstreckung eine gleichbleibende, an eine Kreiskontur angepasste Krümmung aufweisen und zur Anpassung des Anstellwinkels der Leitschaufeln (6) relativ zur Axialrichtung der Luftturbine (1) die Bogenlänge entlang der vorgegebenen Kreiskontur eine radiusabhängige Funktion ist und wobei für jeden Zylinderschnitt der Leitschaufel (6) eine Symmetrieebene zugeordnet ist, die durch eine Axialebene der Luftturbine (1) gebildet wird.

2. Luftturbine (1) nach Anspruch 1, **dadurch gekennzeichnet, dass** die Luftturbine (1) als Wellsturbine ausgebildet ist.

3. Luftturbine (1) nach Anspruch 2, **dadurch gekennzeichnet, dass** der erste Rotor (3) und der zweite Rotor (5) eine übereinstimmende Umlaufrichtung aufweisen.

4. Luftturbine (1) nach Anspruch 3, **dadurch gekennzeichnet, dass** der erste Rotor (3) und der zweite Rotor (5) über eine gemeinsame Rotorwelle (13) in Triebverbindung stehen,

5. Luftturbine (1) nach wenigstens einem der vorausgehenden Ansprüche, **dadurch gekennzeichnet, dass** zwischen dem ersten Rotor (3) und dem zweiten Rotor (5) ein elektrischer Generator (7) angeordnet ist, der mittels Generatorstreben so im Strömungskanal gehaltert wird, dass der radial außenliegende Mantel des elektrischen Generators (7) von der Luftströmung in der Luftturbine (1) überstrichen wird, wobei Generatorstreben zugleich die zwischen dem ersten Rotor (3) und dem zweiten Rotor (5) liegenden Leitschaufeln (6) bilden.

6. Luftturbine (1) nach Anspruch 5, **dadurch gekennzeichnet, dass** die Leitschaufeln eine Durchführung zur Aufnahme von Halteelementen für die Generatoraufhängung und/oder für elektrische Verbindungsleitungen und/oder für Versorgungsleitungen umfasst,

## Claims

1. An air turbine (1) for a wave power station, which is driven by a bidirectional air flow comprising at least one first rotor arrangement (2), including a first rotor (3), and at least one second rotor arrangement (4), including a second rotor (5); the first rotor (3) and the second rotor (5) maintain their rotation direction independent of the direction of incoming air during operation of the air turbine (1) and form an axially flown-through rotor pair in a flow channel, whereas depending on the direction of incoming air one of the rotors forms the upstream rotor and the other rotor forms the downstream rotor; whereas guide vanes (6) are arranged between the first rotor (3) and the second rotor (5), which reduce the turbulence generated by the upstream rotor in the air flow **characterised in that** the guide vanes (6) include a constant elbow adapted to a circular contour along their radial extension and the arc length along the preset circular contour is function of the radius for adapting the angle of attack of the guide vanes (5) with respect to the axial direction of the air turbine (1) and whereas a plane of symmetry is allocated for each cylindrical section of the guide vane (6), which plane is formed of an axial plane of the air turbine (1).

2. An air turbine (1) according to claim 1, **characterised in that** the air turbine (1) is designed as a Wells turbine.

3. An air turbine (1) according to claim 2, **characterised in that** the first rotor (3) and the second rotor (5) have a matching direction of rotation.

4. An air turbine (1) according to claim 3, **characterised in that** the first rotor (3) and the second rotor (5) are in driving connection via a common rotor shaft (13).

5. An air turbine (1) according to at least one of the preceding claims, **characterised in** whereas an electric generator (7) is arranged between the first rotor (3) and the second rotor (5), which is supported by means of generator trusses in the flow channel in such a way that the radially external envelope of the electric generator (7) is brushed over by the air flow in the air turbine (1), whereas generator trusses form at the same time the guide vanes (6) situated between the first rotor (3) and the second rotor (5).

6. An air turbine (1) according to claim 5, **characterised in that** the guide vanes include a feedthrough for accommodating holding elements intended for the generator suspension and/or intended for electrical connection leads and/or for power cables.

## Revendications

1. Turbine à air (1) pour centrale houlomotrice, entraînée par un écoulement d'air bidirectionnel pourvu au moins d'un premier système de rotor (2), comportant un premier rotor (3), et au moins un second système de rotor (4), comportant un deuxième rotor (5); le premier rotor (3) et le deuxième rotor (5) conservent leur sens de rotation indépendamment de la direction du courant d'air entrant et constituent une paire de rotors parcourus axialement par un courant dans un canal d'écoulement, dans laquelle compte tenu de la direction du courant d'air entrant l'un des rotors constitue le rotor amont et l'autre rotor le rotor aval; dans laquelle des aubes directrices (6) sont disposées entre le premier rotor (3) et le second rotor (5), qui réduisent la turbulence générée par le rotor amont dans le courant d'air, **caractérisée en ce que** les aubes directrices (6) présentent une courbure égale, adaptée à un contour circulaire, le long de son extension radiale et que la longueur d'arc le long du contour circulaire prédéterminé est fonction du rayon pour adapter l'angle d'attaque des aubes directrices (5) par rapport à la direction axiale de la turbine à air (1) et dans laquelle un plan de symmétrie est associé à chaque tronçon cylindrique de l'aube directrice (6), qui est constituée d'un plan axial de la turbine à air (1).

2. Turbine à air (1) selon la revendication 1, **caractérisée en ce que** la turbine à air (1) est conçu comme turbine Wells.

3. Turbine à air (1) selon la revendication 2, **caractérisée en ce que** le premier rotor (3) et le second rotor (5) présentent un sens de rotation coïncident.

4. Turbine à air (1) selon la revendication 3, **caractérisée en ce que** le premier rotor (3) et le second rotor (5) forment une liaison motrice par l'intermédiaire d'un arbre rotor commun (13).

5. Turbine à air (1) selon l'une quelconque au moins des revendications précédentes, **caractérisée en ce qu'**un générateur électrique (7) est disposé entre le premier rotor (3) et le second rotor (5), qui est maintenu à l'aide de tronçons de générateur dans le canal d'écoulement de telle sorte que l'enveloppe externe radialement du générateur électrique (7) est balayée par le courant d'air dans la turbine à air (1), dans laquelle les tronçons de générateur constituent simultanément les aubes directrices (6) disposées entre le premier rotor (3) et le second rotor (5).

6. Turbine à air (1) selon la revendication 5, **caractérisée en ce que** les aubes directrices comprennent un passage permettant de recevoir des éléments supports destinés à la suspension du générateur et/ou prévus pour des câbles de liaison électriques et/ou des câbles d'alimentation.
